(19) **Europäisches Patentamt / European Patent Office / Office européen des brevets**

(11) **EP 2 911 018 A1**

(12) # EUROPEAN PATENT APPLICATION

(43) Date of publication:
26.08.2015 Bulletin 2015/35

(51) Int Cl.:
**G05B 15/02** (2006.01) **G05B 23/02** (2006.01)
**G05B 17/02** (2006.01)

(21) Application number: 14156403.9

(22) Date of filing: 24.02.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Schweiz AG**
**8047 Zürich (CH)**

(72) Inventor: **Copley, Jonathan Miles**
**6300 Zug (CH)**

(74) Representative: **Maier, Daniel Oliver**
**Siemens AG**
**Postfach 22 16 34**
**80506 München (DE)**

(54) **Building automation system using a predictive model**

(57) Building automation system and method for automating a building, the method comprising the steps of acquiring (1) at least one reading from at least one input device, of processing (2) the at least one reading, of feeding the at least one reading to a predictive model (3), of detecting deviations (6) of the at least one measured value from the output of the predictive model (3), of identifying deviations (7) from the output of the predictive model (3), of dispatching an alert of an identified or of an unidentified deviation.

FIG 2

## Description

Background

The present disclosure relates to an improved building automation system. The present disclosure focuses on a building automation system that relies on predictive models to detect excursions from expected patterns.

Data from meters, from sensors, and from other devices in buildings are increasingly made available to cloud server applications via home or smart meter gateways. Access to these data yields new value adding applications as well as business models. They frequently harness the recognition of occupancy and behavioral patterns in residential, commercial or industrial buildings.

Recognition of occupancy and behavioral patterns can be utilized for optimization purposes. Optimization in this case applies to building and home automation including HVAC (heating, ventilation, and air conditioning), lighting, safety & security, as well as assisted living.

Deviations from normal occupancy and/or behavioral patterns could, for instance, be: the opening of a door or of a window at an unexpected time of the day, an unexpected temperature rise or fall or noise due to footsteps, the improbable presence of a mobile device as detected by a router, or any other unforeseen sensor readings. A detection of one or of a series of unexpected events may be used to alert occupants. It may also result in follow-up action such as inspection of the interior or entrance door through a web camera. Similarly, behavioral deviations may be used in the context of assisted living for alerting relatives or carers when an occupant appears ill or immobile.

Other deviations from expected behavior such as no sign of life at the times usually expected may indicate that occupants are absent. The heating, ventilation, and air conditioning (HVAC) system may then automatically switch to energy saving mode. Typically, the temperature inside a building may be lowered by several degrees Celsius during absences.

To minimize the cost of detecting occupancy and behavioral patterns, it is desirable to rely primarily on meters, sensors, and communication gateways/routers that are installed as part of standard infrastructure. These meters comprise electricity, water, and other meters applicable to consumption. Sensors that are part of standard infrastructure may comprise temperature, humidity, carbon dioxide, volatile organic compounds and other sensors as used in ventilation control systems. Communication gateways typically include internet and home entertainment data gathered for instance from personal computers, from laptops, from smart phones, or from smart television apparatuses.

Via the fusion of meters, of sensors, and of communication gateway data it is possible to gather other useful pieces of information such as

- the number of people living in a building,
- the lifestyle of those individuals and even what phase of life they are in.

Information about how many and what people occupy a building and about how they behave may in the future be used for purposes such as targeted advertising.

Various approaches to building automation have been on the market for years. These include NEST® (http://www.nest.com). NEST® is a learning thermostat that can be controlled through a phone application. NEST comes with an auto-away feature. That is, NEST uses sensors to detect an individual's presence or absence and accordingly triggers an auto-away program. Meterplug (http://meterplug.com) offers an intermediate plug with proximity control. As someone walks away with his or her phone, the intermediate plug switches off any appliance connected to it. Meterplug relies on Bluetooth as a wireless link between the phone and the intermediate plug.

Tado® (http://www.tado.com/de/) determines the position of a phone to control the heating of a building. To save battery life of a phone, the corresponding application relies on the position of the closest radio cell rather than on data from a satellite-based positioning system.

The aim of the present disclosure is to provide an advanced building automation system that meets the aforementioned requirements.

Summary

The present disclosure is based on the discovery that predictive models of buildings can be used to detect deviations from normal occupancy and/or behavioral patterns. A predictive model of a commercial, residential, or industrial building could, for instance, be a thermal response model. The predictive model typically relies on a plurality of sensor readings as input parameters. The output of the model comprises a plurality of physical parameters that correspond to changes in the input parameters. A building automation system then detects excursions whenever actual physical parameters deviate from their predicted values.

The above problem of detecting excursions from occupancy patterns is resolved by a building automation system according to the independent claims of this disclosure. Preferred embodiments of the present disclosure are covered by the dependent claims.

It is a related object of the present disclosure to provide a building automation system that alerts clients, users or occupants in case of deviations from expected behavioral patterns. The building automation system could, for instance, alert clients, users or occupants through text messages or emails (or via social media, or via any other suitable communication device).

It is another related object of the present disclosure to provide a building automation system that gives useful advice to clients, users and occupants on how to minimise energy intake and/or energy cost of a building.

It is yet another related object of the present disclosure to provide a building automation system that relies on an external database to properly identify deviations from expected behavioral patterns.

It is another object of the present disclosure to provide a building automation system that further detects automated events such as watering plants.

It is a related object of the present disclosure to provide a building automation system that has the capacity to filter out automated events such as watering plants.

It is yet another object of the present disclosure to provide a building automation system that recognizes and harnesses temperature, and/or humidity transients, and/or carbon dioxide, and/or volatile organic compounds, and/or noise, and/or other sensor data.

It is yet another object of the present disclosure to provide a building with a building automation system that resolves at least one of the above objects.

Brief description of the drawings

Various features will become apparent to those skilled in the art from the following detailed description of the disclosed non-limiting embodiments. The drawings that accompany the detailed description can be briefly described as follows:

FIG 1 is a block diagram of a thermal response model.

FIG 2 shows the various components of a building automation system.

Detailed description

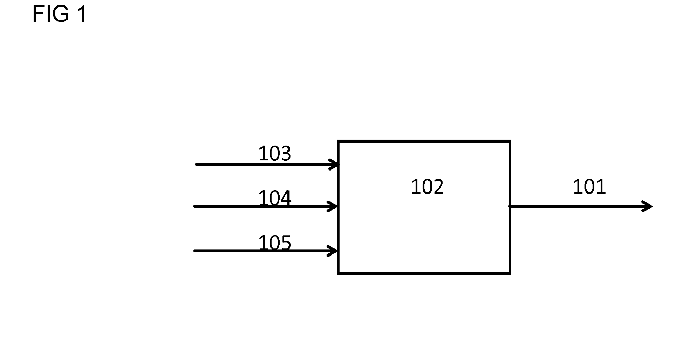

FIG 1 provides a general overview of a thermal response model of a building. The model is detailed in a paper by P ARMSTRONG, S LEEB, L NORFORD, Control with building mass - part I: thermal response model, ASHRAE Transactions, vol 112, part 1. The paper is hereby incorporated by reference.

At its output 101, the model 102 predicts a thermal response $T$ of a building. The same building can be residential, commercial, or industrial building. The term building can preferably also refer to any enclosed space such as the inside of a tank of a power transformer, of a switchgear apparatus, of an aircraft etc.

The model provides an inverse comprehensive transfer function 102 for the purpose of determining thermal response $T$. The inverse comprehensive response transfer function reads

$$T(z) = G_{T/Q}(z) \cdot Q(z) + \sum_{W} G_{T/T_W}(z) \cdot T_W(z)$$

wherein $z$ denotes the z-transform of discrete time steps and $Q$ is the load of the building. $G_{T/Q}$ stands for the transfer function from load to temperature. The index $W$ denotes a wall of a building. $G_{T/TW}$ is the temperature transfer function corresponding to a wall $W$, and $T_W$ is the uniform exogenous temperature of a wall $W$. $T_W$ may also denote a temperature of an adjacent room.

The above model can be fed with a number of input parameters 103 - 105. Input parameters comprise but are not limited to light and plug loads $Q_{L\&P}$, electric and metabolic gains $Q_{HC}$, and/or weather data.

To use the above model of thermal response, the model needs to change from its generic state into a model specifically adapted to a particular building. To this end, values of its transfer functions $G_{T/Q}$, $G_{T/TW}$ need be determined. The method of least squares is preferably employed to obtain estimates of the values of the transfer functions.

The numerical procedure for obtaining estimates is based on least squares and is commonly referred to as a fit procedure. It is often appropriate to set approximate starting values for the transfer functions $G_{T/Q}$, $G_{T/TW}$ prior to a fit procedure. Values of $G_{T/Q}$, $G_{T/TW}$ are in this case determined from engineering formulae using physical parameters such as floor area and/or amount of insulation. The use of appropriate starting values ensures that estimates of transfer functions $G_{T/Q}$, $G_{T/TW}$ are meaningful. The absence of non-causal, unstable or resonant behavior of a predictive model indicates meaningful transfer functions.

The above model can also be reversed such that a load response $Q_{HC}$ is obtained. The two transfer function $G_{Q/T}$ from temperature $T$ to load $Q$ and $G_{Q/TW}$ from an exogenous temperature $T_W$ to load $Q$ are employed for this purpose. The comprehensive room transfer function in z-space reads

$$Q(z) = G_{Q/T}(z) \cdot T(z) + \sum_{W} G_{Q/T_W}(z) \cdot T_W(z)$$

The above model predicts load Q based on temperatures $T(z)$ and $T_W(z)$.

The above models will fail to predict temperature in case of events that are not linked to any of its input values. Typically, events that lead to excursions comprise but are not limited to doors or windows being opened, toilets being flushed, and/or fire hazards inside a building. A temperature reading (or any other sensor reading) will then deviate from its predicted value.

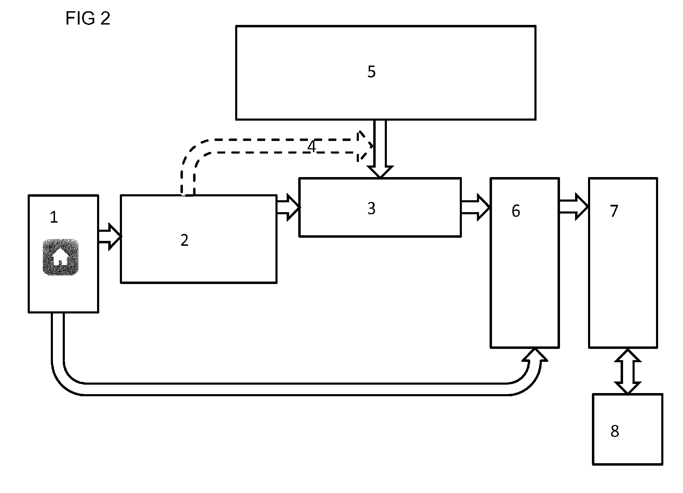

The various principal and optional components of the building automation system as per this disclosure are shown on FIG 2. The building automation system of FIG 2 technically implements a model 3 such as the aforementioned thermal response model.

A building 1 provides a plurality of sensors and/or meters. The sensors may comprise, but are not limited to, temperature sensors, humidity sensors, air quality (CO, CO2, VOC)and/or light sensors. Meters apply to resources and typically are electricity meters, water meters, and/or smart electricity meters. Further meters can be devices for metering data such as internet routers, wifi routers, and/or other networked devices.

Functional block 2 merges the data obtained from various meters and/or from various sensors into data time histories. Each data time history preferably covers a time span of one day. Each data time history contains a series of readings from sensors or from meters over a given time span.

In a preferred embodiment, the building automation system combines the data time histories into a matrix of data time histories. The matrix covers a time span of the past P days, with P being a natural number.

Sensor fusion is another approach known for its capacity to combine signals from different sensors into one new signal. The new signal should be better than each individual signal. The term better means more accurate, or more complete, or fewer missing data points, or any combination thereof. By way of example, a combination of signals from an electricity meter and from a water meter could lead to a new signal that is less noisy. The new signal could also cover those points in time when precise measurements from a water meter are missing.

An arrow 4 with dashed lines indicates the optional use of data time histories for calibration purposes. The dashed lines of the arrow 4 indicate this connection is not permanent. A generic model 5 such as the above thermal response model will need to change into a model specifically adapted to a particular building. To that end, the model is fed with input values such as the aforementioned values $Q_{L\&P}$, $Q_{HC}$, and/or weather data. At the same time, (intended) output variables such as temperature are provided from measured data. The parameters of the model are adapted so as to obtain the best possible fit between model output and measured values.

The building automation system described herein is not limited to the thermal response model as described in P ARMSTRONG, S LEEB, L NORFORD, Control with building mass - part I: thermal response model, ASHRAE Transactions, vol 112, part 1. A building automation system according to the present disclosure may rely on another model 5 such as a neural network and/or a fuzzy logic network and/or any other artificial intelligence technique. The training process changes in accordance with the model.

After training 4, a model 3 has become available that is tailored to a specific building. The trained model 3 makes predictions about the aforementioned sensor and/or meter readings. The model 3 may also output quantities derived from readings. Standard deviations of individual readings, their (Gaussian, Weibull, Binomial, and/or Poisson) distribution functions, and/or thermal time constants of individual rooms inside a building are typical examples of derived quantities.

Block 6 distinguishes between normal and abnormal behavior and/or events inside a building. To this end, block 6 largely relies on statistics. The overall goal of block 6 is to minimize type I and type II errors. The system shall, on the one hand, detect as many abnormal behaviors and/or events as possible as abnormal (type I error). False alarms of abnormal behaviors and/or events (type II errors) shall, on the other hand, be avoided.

Functional block 6 compares values predicted by the model 3 to actual measurements (1) and/or to the processed values of block (2). Measured sensor or meter data will, in general, be noisy, incomplete and/or biased. That is why measured data will deviate from predicted values even in the absence of behavioral deviations. To that end, the system may use standard deviations and other quantities derived and supplied by the model of block 3. In deciding whether a given reading is an outlier, the comparison block 3 may add a multiple of a standard deviation to a predicted value. If the distance between a measured and a predicted value exceeds a given multiple of standard deviations, then the measured value will be an outlier.

In a preferred embodiment, the comparison block 6 may also rely on distributions of sensor and/or meter readings other than Gaussian distributions. The system will then use a measure adequate for a given distribution to judge whether a reading is an outlier.

After detection of outliers, the system will try and identify those. In a preferred embodiment, the identification block 7 may use correlations between various sensor readings to identify outliers. An event is considered more likely to be an outlier if several sensor and/or meter readings deviate from their predicted values at the same time.

By way of example, power and water consumption patterns of a washing machine can be detected simultaneously through an electricity meter and through a water meter. By way of yet another example, a bedtime ritual may involve a typical profile in the form of water consumption for brushing teeth, for using the toilet, and in the form of electricity consumption when the lights in the house are switched off. The system will link these outliers to a corresponding cause.

The system will also try and identify events that occur on a regular basis. A change of a sensor reading may always or frequently occur at exactly the same point in time. That is, a change of a sensor may occur hourly, daily, or every working day, or only on weekends, or always on the same day during a week. By way of example, a program may water plants on a daily basis every evening at 8 p.m. (20:00). By way of another example, a telephone may switch to sleep mode at 11 pm (23:00) and thus log off at the WiFi router. This particular pattern indicates that it is more likely that someone is still around and has not left the building yet.

In a preferred embodiment, the system will also rely on Bayes-filtering in order to identify outliers. Suppose an occupant has passed out and needs help. Some of the occupant's activities such as flushing a toilet, cooking, opening a window, will normally result in excursions from the predictions of the model 3. Any absence of such outliers may, however, also indicate that the occupant is on vacation. For the purpose of identification of an outlier, Bayes-filtering may prove useful.

By way of example, let $O$ represent the event that an occupant has passed out and needs help. $P(O) = 10\%$ represents the overall probability of such an event. Let A denote the event of no outliers during the day and let $P(A) = 30\%$ denote the corresponding probability. Also, suppose that in 85% of all occupant's predicaments there will be no outliers during the day. In other words, the probability of an A event under the condition of an O event is 85%, $P(A/O) = 85\%$. The probability $P(O|A)$ of an someone having passed out under the condition of no outliers is expressed as

$$P(O|A) = \frac{P(A|O)}{P(A)} \cdot P(O) = \frac{0.85}{0.3} \cdot 0.1 \approx 0.28$$

In this example, an absence of outliers indicates with a probability of $P(O/A) = 28\%$ that an occupant needs help.

The above calculation of probabilities may prove useful not only for assisted living. The same approach may, for instance, also be employed to calculate the probability of burglary under the condition of a sudden temperature drop. Further practical uses include optimization of energy intake, targeted marketing, benchmarks of (similar) buildings etc.

In the above example, the probabilities of someone's predicament or the likelihood of no outliers when a misfortune has befallen an occupant may change with time. Similarly, the probabilities of a break-in in a given suburb or of excessive energy intake may vary with location. For these reasons it will often be futile to permanently store these probabilities in the non-volatile memory of a building automation system.

In a preferred embodiment, the building automation system communicates with an external database. The external database will typically be provided by a cloud computer 8. The building automation system may, for instance, communicate with the cloud computer through a connectionless link. The communication between the building automation system and the cloud computer may utilize an internet protocol (IP) and/or a user datagram protocol (UDP).

In yet another preferred embodiment, the building automation system uses the above connection to a cloud computer 8 and hands over the calculation. In this embodiment, the building automation no longer fetches probability values from a cloud computer. Instead, the building automation system notifies the cloud computer of an absence of outliers or of a sudden drop in temperature. The building automation system also requests the probabilities of an occupant in need of help or of a break-in. The cloud computer then uses its database to calculate the above probabilities and sends them back to the building automation system.

Should the probability of one of the above misfortunes exceed a given threshold of typically 95%, the building automation will submit an alert. The alert may be sent to an occupant, to a health professional, to a security service or any other client. Typical ways of communication include email services, messengers, text messages, pagers etc. In a preferred embodiment, the building automation system also dispatches an alert in case of an unlikely event that could not be identified.

In another envisaged embodiment, a cloud computer does not revert to a client but dispatches the above alert directly. In yet another envisaged embodiment, alerts are dispatched both by the cloud computer 8 and by the building automation system.

Any steps of a method according to the present disclosure may be embodied in hardware, in a software module executed by a processor, or in a cloud computer, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing from the spirit and the scope of the invention as defined by the following claims. It should also be understood that the invention is not restricted to the illustrated embodiments and that various modifications can be made within the scope of the following claims.

Reference numerals

| 1 | building with sensors |
|---|---|
| 2 | data fusion unit |
| 3 | model specifically adapted to a building |
| 4 | non-permanent link to train the model 3 |
| 5 | generic model |
| 6 | excursion detection |
| 7 | excursion identification |
| 8 | cloud computer |
| 101 | model output |
| 102 | inverse comprehensive transfer function |
| 103, 104, 105 | model input |

**Claims**

1. A method for automating a building, the method comprising the steps of
   acquiring (1) at least one reading from at least one input device,
   pre-processing (2) the at least one reading,
   then feeding the at least one reading to a predictive model (3),
   detecting (6) deviations of at least a measured (1) value or of at least a processed (2) value from the output of the predictive model (3),
   then identifying (7) the causes of said deviations, dispatching an alert of an identified or of an unidentified deviation through a communication device.

2. The method for automating a building according to claim 1, wherein the at least one reading from at least one input device is acquired from an electricity meter, and/or from a water meter, and/or from a smart electricity meter, and/or from an internet router, and/or from a wifi router, and/or from a networked device, and/or from a temperature sensor, and/or from a humidity sensor, and/or from a light sensor and/or from yet another sensor.

3. The method for automating a building according to any of the claims 1 to 2, wherein processing (2) of the at least one reading is attenuation of noise, and/or compensation of bias, and/or sensor fusion, and/or arrangement of the at least one reading into a data time history, and/or arrangement of the at least one reading into a matrix of data time histories.

4. The method for automating a building according to any of the claims 1 to 3, wherein the predictive model (3) is a thermal response model, and/or a neural network, and/or a fuzzy logic network, and/or any other artificial intelligence technique.

5. The method for automating a building according to any of the claims 1 to 4, wherein the model (3) is trained prior to its use as a predictive model (3), such that the model (3) is tailored to a specific building.

6. The method for automating a building according to claim 5, wherein the training of the model (3) involves a least squares optimization of model parameters.

7. The method for automating a building according to any of the claims 1 to 6, wherein the output of the predictive model (3) comprises derived quantities, such as standard deviations of model output, and/or distribution functions of model output, and/or thermal time constants of at least one part of a confined space.

8. The method for automating a building according to any of the claims 1 to 7, wherein the identification (7) of deviations applies to events that occur on a regular basis.

9. The method for automating a building according to any of the claims 1 to 8, wherein the identification (7) of deviations utilizes cross-correlations between readings from different input devices, such as to link deviations of readings from different input devices to a common cause.

10. The method for automating a building according to any of the claims 1 to 9, wherein the identification (7) of deviations utilizes an internal and/or an external database to calculate probabilities of events, preferably through a Bayesian approach.

11. The method for automating a building according to any of the claims 1 to 10, wherein the method further comprises the step of communicating with a cloud computer (8).

12. The method for automating a building according to any of the claims 1 to 11, wherein a notification of an identified or of an unidentified deviation is dispatched through a cloud computer.

13. A non-transitory, tangible computer readable medium having instructions executable by a processor for performing the method of one of any of the claims 1 to 13 when said instructions are executed.

14. A building automation system comprising
a reading means for acquiring (1) at least one reading from at least one input device,
a processor for pre-processing (2) the at least one reading,
a connector for feeding the at least one reading to a predictive model (3),
a detecting means for detecting deviations (6) of at least one measured (1) value or of at least one processed (2) value from the output of the predictive model (3),
an identifying means for identifying the causes of said deviations (7),
a communication device for dispatching a notification of an identified or of an unidentified deviation.

15. A building with a building automation system in accordance with claim 14.

FIG 1

FIG 2

**EUROPEAN SEARCH REPORT**

Europäisches
Patentamt
European
Patent Office
Office européen
des brevets

Application Number

EP 14 15 6403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/066168 A1 (FADELL ANTHONY MICHAEL [US] ET AL) 15 March 2012 (2012-03-15) | 1-9, 13-15 | INV. G05B15/02 |
| Y | * paragraph [0006] - paragraph [0016] * <br> * paragraph [0025] - paragraph [0091] * <br> ----- | 10-12 | G05B23/02 <br> G05B17/02 |
| Y | US 2013/274940 A1 (WEI DONG [US] ET AL) 17 October 2013 (2013-10-17) <br> * paragraph [0003] - paragraph [0005] * <br> * paragraph [0017] - paragraph [0045] * <br> ----- | 10-12 | |
| X | US 2012/232701 A1 (CARTY RAPHAEL [US] ET AL) 13 September 2012 (2012-09-13) <br> * paragraph [0008] - paragraph [0014] * <br> * paragraph [0027] - paragraph [0059] * <br> ----- | 1,2,4-8, 10 | |
| Y | US 2012/310376 A1 (KRUMM JOHN CHARLES [US] ET AL) 6 December 2012 (2012-12-06) <br> * paragraph [0001] - paragraph [0005] * <br> * paragraph [0070] - paragraph [0090] * <br> ----- | 10-12 | |

TECHNICAL FIELDS
SEARCHED      (IPC)

G05B

The present search report has been drawn up for all claims

| Place of search | Date of completion of the search | Examiner |
|---|---|---|
| The Hague | 21 July 2014 | Patsiopoulos, N |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 15 6403

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2014

| Patent document<br>cited in search report | | Publication<br>date | Patent family<br>member(s) | | Publication<br>date |
|---|---|---|---|---|---|
| US 2012066168 | A1 | 15-03-2012 | US | 2012066168 A1 | 15-03-2012 |
| | | | US | 2013297555 A1 | 07-11-2013 |
| US 2013274940 | A1 | 17-10-2013 | NONE | | |
| US 2012232701 | A1 | 13-09-2012 | AU | 2012225502 A1 | 16-01-2014 |
| | | | GB | 2502760 A | 04-12-2013 |
| | | | US | 2012232701 A1 | 13-09-2012 |
| | | | WO | 2012122234 A2 | 13-09-2012 |
| US 2012310376 | A1 | 06-12-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P ARMSTRONG ; S LEEB ; L NORFORD.** Control with building mass - part I: thermal response model. *ASHRAE Transactions,* vol. 112